# EUROPÄISCHE PATENTSCHRIFT

(11) **EP 1 107 666 B1**
(45) Veröffentlichungstag und Bekanntmachung des Hinweises auf die Patenterteilung: **06.11.2002**
(21) Anmeldenummer: 99942880.8
(22) Anmeldetag: 18.08.1999
(51) Int. Cl.: A01N 25/00, A01N 47/22

(54) **SCHNECKENKÖDER**
SNAIL BAIT
APPATS POUR ESCARGOTS

(30) Priorität: 29.08.1998 DE 19839480
(43) Veröffentlichungstag der Anmeldung: 20.06.2001
(73) Patentinhaber: Bayer Aktiengesellschaft, 51368 Leverkusen (DE)
(72) Erfinder: WIRTH, Wolfgang, D-51429 Bergisch Gladbach (DE); SCHNORBACH, Hans-Jürgen, D-40789 Monheim (DE)
(86) Internationale Anmeldenummer: EP9906045
(87) Internationale Veröffentlichungsnummer: WO00011948

(56) Entgegenhaltungen:
- EP-A- 0 045 280
- EP-A- 0 384 251
- CH-A- 269 097
- DE-A- 3 612 161
- DE-A- 4 111 389
- FR-A- 2 050 908

## Beschreibung

Die vorliegende Erfindung betrifft neue Schneckenköder, ein Verfahren zu deren Herstellung und deren Verwendung zur Bekämpfung von Schnecken.

Es ist bereits bekannt geworden, terrestrische Schnecken mit Hilfe von Ködern zu bekämpfen, die Fraßstoffe und molluskizide Wirkstoffe, wie Methiocarb, Metaldehyd oder Metallchelate, enthalten (vgl. DE-A 35 03 608, DE 36 12 161, WO 96-05 728 und FR-A-2 050 908, DE-A-4 111 389).

Derartige Schneckenköder lassen sich zum Beispiel herstellen, indem man einen oder mehrere molluskizide Wirkstoffe mit Fraßstoff, Trägermaterial, Kleber und anderen üblichen Zusatzstoffen im wesentlichen trocken zu Formkörpern verpreßt. Nachteilig an diesen Ködern ist, daß sie eine relativ rauhe Oberfläche aufweisen, wodurch bei der Verpackung, beim Transport und auch bei der Ausbringung unerwünschter Abrieb entsteht. Ungünstig ist außerdem, daß diese Formkörper unter Einfluß von Regenwasser verhältnismäßig unbeständig sind und durch den einsetzenden Zerfall einen Teil ihrer Wirksamkeit verlieren.

Das Dokument EP-A-0 384 251 offenbart Zusammensetzungen für Schneckenköder enthaltend geschrotete und/oder ausgepreßte Teile von Pflanzen der Arten Cruciferae, Tropaeolum oder Caprifoliacea, molluskizide Wirkstoffe, Bindemittel und ggb. Zusatzstoffe, wobei die o.g. geschroteten und/oder ausgepreßten Teile von Pflanzen eine Teilchengröße von 0.01 bis 3mm besitzen.

Weiterhin ist schon bekannt, daß sich Schneckenköder auf Basis von Metaldehyd herstellen lassen, indem man die aktive Komponente mit den übrigen Bestandteilen, jedoch ohne Klebermaterial, vermischt und nach Zugabe von Wasser extrudiert und zu Pellets verarbeitet. Die Wirksamkeit dieser Formkörper ist gut, aber die physikalischen Eigenschaften sind unter Praxisbedingungen nicht immer ausreichend.

Es wurden nun neue Schneckenköder gefunden, die aus
a) 3,5-Dimethyl-4-methylthio-phenyl-methylcarbamat der Formel 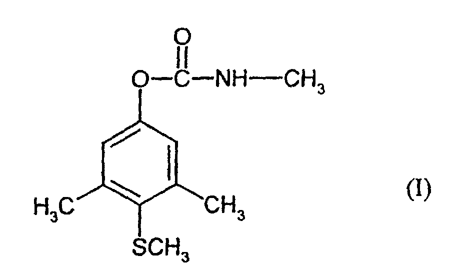 gegebenenfalls im Gemisch mit einem oder mehreren weiteren molluskiziden Wirkstoffen,
b) feinkörnigem Getreidemehl,
c) modifizierter Stärke und Formaldehyd abspaltender Substanz,
d) Melasse und
e) gegebenenfalls Zusatzstoffen
bestehen.

Weiterhin wurde gefunden, daß sich die neuen Schneckenköder herstellen lassen, indem man
(1) 3,5-Dimethyl-4-methylthio-phenyl-methylcarbamat der Formel 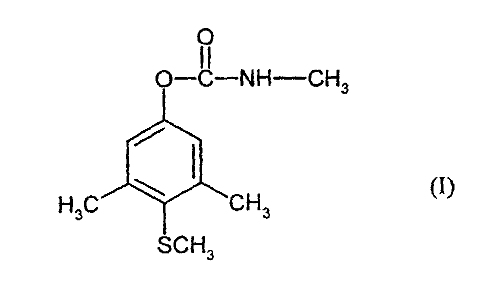 gegebenenfalls im Gemisch mit einem oder mehreren weiteren molluskiziden Wirkstoffen,
   sowie gegebenenfalls im Gemisch mit Zusatzstoffen vermengt und fein vermahlt,
(2) die erhaltene Vormischung mit
   - feinkörnigem Getreidemehl,
   - modifizierter Stärke und Formaldehyd abspaltender Substanz vermischt und dann mit Melasse besprüht,
(3) die resultierende homogene Mischung mit soviel Wasser versetzt, daß ein Teig entsteht,
(4) den Teig extrudiert und zerkleinert und
(5) das anfallende Produkt trocknet.

Schließlich wurde gefunden, daß die neuen Schneckenköder sehr gut zur Bekämpfung von terrestrischen Schnecken verwendbar sind.

Es ist als äußerst überraschend zu bezeichnen, daß die erfindungsgemäßen Schneckenköder eine bessere Stabilität aufweisen als die bisher bekannten Formkörper für den gleichen Anwendungszweck. Unerwartet ist vor allem, daß die erfindungsgemäßen Köder trotz des relativ geringen Anteils an Kleber insbesondere gegenüber Regenwaser wesentlich beständiger sind als entsprechende, nach dem Trockenpreßverfahren hergestellte Köder, die einen deutlich höheren Anteil an Kleber enthalten.

Die erfindungsgemäßen Schneckenköder zeichnen sich durch eine Reihe von Vorteilen aus. So besitzen sie eine hohe Abriebfestigkeit. Günstig ist außerdem, daß sie selbst nach längerer Beregnung ihre Form und ihre Wirksamkeit behalten.

Die erfindungsgemäßen Schneckenköder sind durch die unter (a) bis (e) aufgeführten Bestandteile charakterisiert.

Als molluskizider Wirkstoff ist in den erfindungsgemäßen Ködern jeweils 3,5-Dimethyl-4-methylthio-phenyl-methylcarbamat der Formel (I) enthalten, das unter dem Common Name Methiocarb bekannt ist.

Als molluskizide Wirkstoffe, die zusätzlich vorhanden sein können, kommen vorzugsweise Metaldehyd und Metallchelate, wie Komplexe aus Ethylendiamin-tetraessigsäure und Eisen- oder Kupferionen, in Frage.

Als Getreidemehle können in den erfindungsgemäßen Schneckenködern handelsübliche Mehle, wie Weizenmehl, Roggenmehl, Reisstärke u.a., enthalten sein. Bevorzugt sind Hartweizenmehl und Weichweizenmehl. Das Mehl ist in feinkörniger Form vorhanden, vorzugsweise in Korngrößen unterhalb von 250 µ.

Unter modifizierter Stärke sind im vorliegenden Fall handelsübliche Produkte dieses Typs zu verstehen. Bevorzugt ist kaltquellende Maisstärke.

Als Formaldehyd abspaltende Substanzen können alle üblichen Produkte enthalten sein, die zur Freisetzung von Formaldehyd geeignet sind. Bevorzugt sind Harnstoff-Formaldehyd-Kondensationsprodukte.

Unter Melasse sind im vorliegenden Fall übliche, bei der Fabrikation von Zucker anfallende, sirupöse Mutterlaugen zu verstehen.

Als Zusatzstoffe, die in den erfindungsgemäßen Ködern enthalten sein können, kommen vorzugsweise Konservierungsmittel, Farbstoffe, Schneckenlockstoffe, Mahlhilfsmittel, Bitterstoffe, Warmblüter-Repellents und Anticakingmittel in Betracht, sowie auch Wasser.

Als Beispiele für Konservierungsmittel seien 2-Hydroxybiphenyl, Sorbinsäure, p-Hydroxy-benzaldehyd, p-Hydroxy-benzoesäure-methylester, Benzaldehyd, Benzoesäure, p-Hydroxy-benzoesäure-propylester und p-Nitro-phenol genannt.

Als Beispiele für Farbstoffe seien anorganische Pigmente, Eisenoxid, Titandioxid und Ferrocyanblau, sowie organische Farbstoffe, wie Anthrachinon-, Azo- und Metallphthalocyanin-farbstoffe erwähnt.

Als Schneckenlockstoffe kommen alle üblichen, für diesen Zweck geeigneten Substanzen in Betracht. Beispielhaft genannt seien Pflanzenextrakte und deren Folgeprodukte, sowie Produkte tierischer Herkunft.

Als Mahlhilfsmittel kommen alle für diesen Zweck üblicherweise verwendbaren Stoffe in Frage. Vorzugsweise genannt seien Kaoline, Tonerden, Talkum, Kreide, Quarzpulver und hochdisperse Kieselsäure.

Als Warmblüter-Repellents, die eine abweisende Wirkung auf warmblütige Lebewesen, wie Hunde oder Igel, ausüben, kommen alle für diesen Zweck üblichen Komponenten in Betracht. Beispielhaft genannt sei Nonylsäure-vanillylamid.

Als Bitterstoffe kommen alle für diesen Zweck üblichen Substanzen in Frage. Beispielhaft genannt sei Denatonium-benzoat.

Als Anticakingmittel kommen alle für diesen Zweck üblichen Stoffe in Betracht, die ein Verklumpen und Zusammenbacken verhindern. Beispielhaft genannt seien Feuchtigkeit adsorbierende Pulver von Kieselgur, pyrogenen Kieselsäuren, Tricalciumphosphat, Calciumsilikate, Aluminiumoxid, Magnesiumoxid, Magnesium-carbonat, Zinkoxid, Stearaten und Fettaminen.

Der Gehalt an den einzelnen Komponenten kann in den erfindungsgemäßen Schneckenködern innerhalb eines bestimmten Bereiches variiert werden. So liegen die Konzentrationen
- an Wirkstoff der Formel (I) gegebenenfalls im Gemisch mit einem oder mehreren weiteren molluskiziden Wirkstoffen im allgemeinen zwischen 0,5 und 15 Gew.-%, vorzugsweise zwischen 1,0 und 13 Gew.-%,
- an Getreidemehl im allgemeinen zwischen 60 und 90 Gew.-%, vorzugsweise zwischen 65 und 85 Gew.-%,
- an modifizierter Stärke und Formaldehyd abspaltender Substanz im allgemeinen zwischen 0,1 und 6 Gew.-%, vorzugsweise zwischen 0,2 und 5 Gew.-%,
- an Melasse im allgemeinen zwischen 1 und 10 Gew.-%, vorzugsweise zwischen 2 und 4 Gew.-%, und
- an Zusatzstoffen im allgemeinen zwischen 0 und 5 Gew.-%, vorzugsweise zwischen 0 und 3 Gew,-%.

Bei der Durchführung des erfindungsgemäßen Verfahrens werden vozugsweise diejenigen Komponenten eingesetzt, die bereits im Zusammenhang mit der Beschreibung der erfindungsgemäßen Schneckenköder für die unter (a) bis (e) aufgeführten Bestandteile vorzugsweise genannt wurden.

Die Mengen an den einzelnen Komponenten werden so gewählt, daß die Substanzen in den erfindungsgemäßen Schneckenködern in denjenigen Gewichtsverhältnissen vorhanden sind, die oben erwähnt wurden. Die Menge an Wasser jedoch so bemessen, daß in der Stufe (3) des Verfahrens ein Teig entsteht. Die eingesetzte Menge an Wasser liegt im allgemeinen zwischen 25 und 35 Gew.-%, vorzugsweise zwischen 27 und 34 Gew.-%, bezogen auf die übrigen Bestandteile. In den erfindungsgemäßen Schneckenködern ist der Gehalt an Wasser aber deutlich niedriger, weil das zunächst feucht anfallende Produkt in der Stufe (5) des Herstellungsverfahrens noch getrocknet wird. Es verbleibt praktisch nur die im Getreidemehl vorhandene Restfeuchtigkeit.

Die Temperaturen können bei der Durchführung des erfindungsgemäßen Verfahrens in einem bestimmten Bereich variiert werden. Man arbeitet bei der Durchführung
- der Stufe (1) im allgemeinen bei Temperaturen zwischen 0°C und 30°C, vorzugsweise bei Raumtemperatur,
- der Stufe (2) im allgemeinen bei Temperaturen zwischen 0°C und 30°C, vorzugsweise bei Raumtemperatur,
- der Stufe (3) im allgemeinen bei Temperaturen zwischen 0°C und 40°C, vorzugsweise zwischen 10°C und 30°C,
- der Stufe (4) im allgemeinen bei Temperaturen zwischen 20°C und 60°C, vorzugsweise zwischen 30°C und 50°C und
- der Stufe (5) im allgemeinen bei Temperaturen zwischen 20°C und 90°C, vorzugsweise zwischen 30°C und 80°C.

Bei der Durchführung der Stufen (1) bis (3) und (5) des erfindungsgemäßen Verfahrens arbeitet man im allgemeinen unter Atmosphärendruck. Es ist aber auch möglich, den Trocknungsprozeß in der Stufe (5) unter vermindertem Druck durchzuführen. Bei der Durchführung der Stufe (4) arbeitet man im allgemeinen unter erhöhtem Druck, vorzugsweise unter einem Druck zwischen 30 und 100 bar.

Bei der Durchführung des erfindungsemäßen Verfahrens können alle für derartige Prozesse üblichen Geräte eingesetzt werden. So verwendet man zur Zerkleinerung des Materials in der Stufe (1) übliche Mahlgeräte, wie beispielsweise Luftstrahlmühlen.

Für die Mischvorgänge in den Stufen (2) und (3) kommen übliche Mischer in Frage, in die während des Mischvorgangs zusätzliche Substanzen, wie Melasse und Wasser eingedüst werden können. Vorzugsweise verwendbar sind Pflugscharmischer, Paddelmischer und Zwei-Wellen-Extruder.

Zur Extrusion in der Stufe (4) kommen in der Lebensmittelindustrie übliche Geräte in Betracht, mit deren Hilfe ein Teig durch Lochscheiben strangförmig verpreßt und anschließend zerkleinert werden kann.

Zum Trocknen des feuchten Produktes in der Stufe (5) kommen übliche Apparate in Frage, die zum Entzug von Feuchtigkeit aus teilchenförmigen Festsubstanzen geeignet sind. In einer bevorzugten Ausführungsform arbeitet man in der Weise, daß man das feuchte Produkt zunächst in einem Wirbelbett vortrocknet und anschließend in einem separaten Gerät auf die gewünschte Endfeuchtigkeit trocknet.

Im einzelnen geht man bei der Durchführung des erfindungsgemäßen Verfahrens so vor, daß man
- in der Stufe (1) Wirkstoff der Formel (I) gegebenenfalls im Gemisch mit einem oder mehren weiteren molluskiziden Wirkstoffen sowie gegebenenfalls mit Zusatzstoffen, wie beispielsweise Mahlhilfsstoffen, Konservierungsstoffen, Farbstoffen usw. versetzt und das entstehende Gemisch fein vermahlt,
- in der Stufe (2) die erhaltene Vormischung mit feinkörnigem Getreidemehl, modifizierter Stärke und Formaldehyd abspaltender Substanz vermengt, dann Melasse in flüssiger Form zugibt und die Komponenten zu einem homogenen Produkt vermischt,
- in der Stufe (3) soviel Wasser unter Mischen und Kneten hinzufügt, daß ein Teig entsteht,
- in der Stufe (4) den Teig unter Druck extrudiert und zerkleinert und
- in der Stufe (5) das teilchenförmige Material zunächst vor- und dann nachtrocknet und anschließend auf Raumtemperatur abkühlt.

Die Größe der Schneckenköder kann bei der Durchführung des erfindungsgemäßen Verfahrens in der jeweils gewünschten Weise innerhalb eines bestimmten Bereiches variiert werden. Man zerkleinert den Teig im allgemeinen so, daß Pellets oder strangförmige Teilchen entstehen. Der durchschnittliche Durchmesser beziehungsweise die durchschnittliche Länge der Teilchen liegt im allgemeinen zwischen 1 und 4 mm, vorzugsweise zwischen 1,5 und 3 mm.

Die erfindungsgemäßen Schneckenköder eignen sich sehr gut zur Bekämpfung von terrestischen Schnecken in der Landwirtschaft und im Gartenbau. Zu den Schnecken gehören alle landlebenden Nackt- und Gehäuseschnecken, welche in der Mehrzahl als polyphage Schädlinge landwirtschaftlicher und gärtnerischer Kulturen auftreten. Wichtige derartige Schädlinge sind Nacktschnecken, wie Arion rufus (Große Wegschnecke), Arion ater und andere Arionidae, Limax-Arten, ferner Ackerschnecken, wie Deroceras reticulatum und Deroceras agreste aus der Familie Limacidae, sowie Arten aus der Familie Milacidae, und außerdem schädliche Gehäuseschnecken, wie solche der Gattung Cepaea, Discus, Helicigona und Helicella.

Bei der Bekämpfung von Schnecken kann die Aufwandmenge an den erfindungsgemäßen Ködern innerhalb eines großen Bereiches variiert werden. Im allgemeinen verwendet man zwischen 2 und 15 kg Schneckenköder pro Hektar, vorzugsweise zwischen 3 und 7 kg pro Hektar.

Die erfindungsgemäßen Schneckenköder können nach üblichen Methoden, wie beispielsweise durch Streuen und Eindrillen, ausgebracht werden.

Die Erfindung wird durch die folgenden Beispiele veranschaulicht.

### Beispiel 1

Herstellung von erfindungsgemäßem Schneckenköder.

Ein Gemisch aus
400 g 3,5-Dimethyl-4-methylthio-phenyl-methylcarbamat,
15 g p-Nitrophenol,
29 g blauem Farbpigment und
56 g hochdisperser Kieselsäure
wird bei Raumtemperatur fein gemahlen. Die so erhaltene Vormischung wird in einem Mischer unter Rühren bei Raumtemperatur mit
8500 g Weizenmehl mit einer Korngröße von unter 250 µ,
250 g kaltquellender Maisstärke und
50 g Harnstoff-Formaldehyd-Kondensationsprodukt

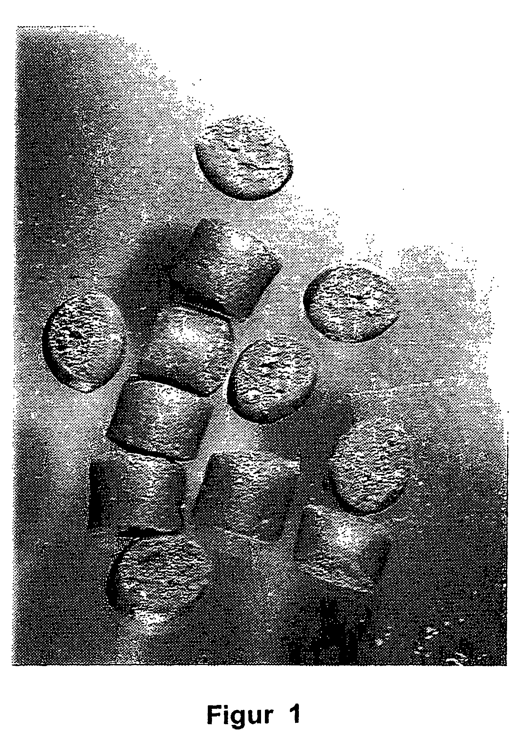

vermengt. Danach werden unter weiterem Rühren bei Raumtemperatur 700 g flüssige Melasse aufgesprüht. Die resultierende Mischung wird bei Raumtemperatur mit 3000 g Wasser versetzt und so lange gemischt und geknetet, bis ein homogener Teig enstanden ist. Anschließend wird der Teig bei 40°C unter einem Druck von 60 bar durch eine Lochscheibe in Form von Strängen extrudiert, die in 2 bis 3 mm lange Stücke zerkleinert werden. Das anfallende Material wird zunächst im Wirbelbett bei Temperaturen zwischen 30°C und 80°C und dann in einem separaten Trockner bei Temperaturen zwischen 30°C und 80°C getrocknet. Man erhält auf diese Weise 10 000 g an Schneckenköder in Form von Pellets, die in Figur 1 vergrößert abgebildet sind.

Es ist erkennbar, daß die Teilchen eine relativ glatte Oberfläche aufweisen.

### Vergleichsbeispiel

Herstellung von bekanntem Schneckenköder.

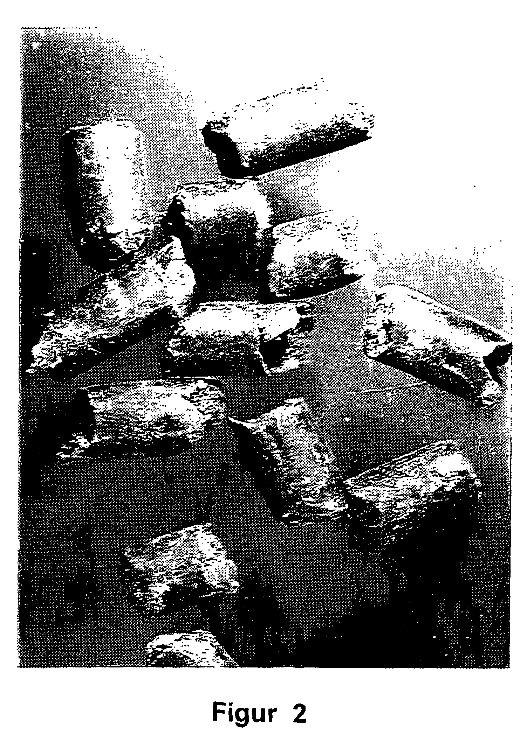

Ein Gemisch aus
400 g 3,5-Dimethyl-4-methylthio-phenyl-methylcarbamat,
15 g p-Nitrophenol,
29 g blauem Farbpigment und
56 g hochdisperser Kieselsäure
wird bei Raumtemperatur fein gemahlen. Die so erhaltene Vormischung wird in einem Mischer unter Rühren bei Raumtemperatur mit
7600 g Weizenschrot mit einer Korngröße von etwa 500 µ und
1200 g Bindemittel
vermengt. Danach werden unter weiterem Rühren bei Raumtemperatur 700 g flüssige Melasse aufgesprüht. Die resultierende Mischung wird bei einer Temperatur von 60°C unter Druck durch eine Ringmatrize zu länglichen Teilchen verpreßt, die eine mittlere Länge von 2 bis 3 mm besitzen. Man erhält auf diese Weise 10 000 g an Schneckenköder in Form länglicher Teilchen, die in Figur 2 vergrößert abgebildet sind. Es ist erkennbar, daß die Teilchen rauhe Bruchkanten aufweisen.

### Stabilitätstest

In einer Glasschale werden jeweils
0,5 g Schneckenköder gemäß Beispiel 1 beziehungsweise
0,5 g Schneckenköder gemäß Vergleichsbeispiel
flächig ausgebracht, mit jeweils 100 ml Wasser übergössen und 24 Stunden stehengelassen. Danach werden die Köder visuell beurteilt.

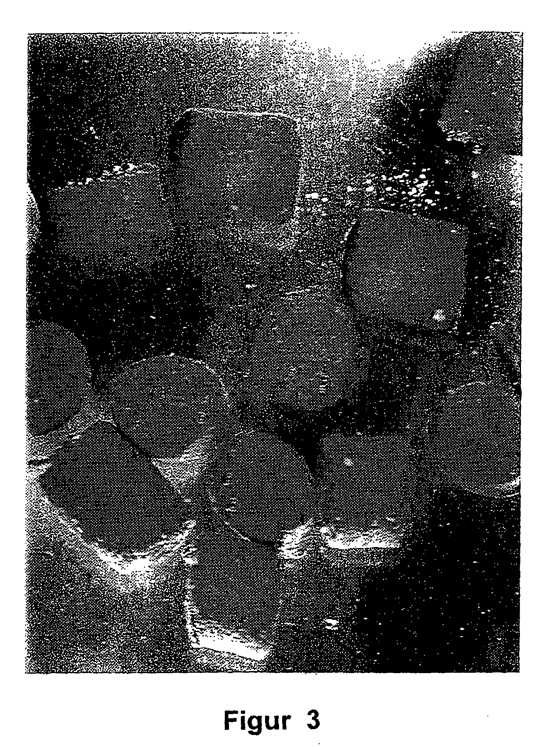

Figur 3 zeigt Schneckenköder gemäß Beispiel 1 nach der Behandlung mit Wasser.

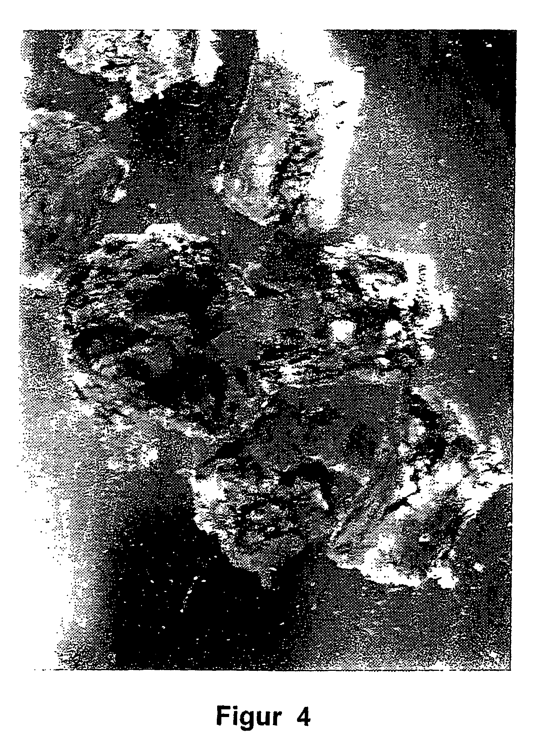

Figur 4 zeigt Schneckenköder gemäß Vergleichsbeispiel nach der Behandlung mit Wasser.

Es ist erkennbar, daß
- erfindungsgemäßes Ködermaterial auch nach der Behandlung mit Wasser in der ursprünglichen Form und nahezu unzersetzt vorliegt, während
- Ködermaterial gemäß Vergleichsbeispiel in weitgehend zerstörter Form vorliegt.

## Patentansprüche

1. Schneckenköder, die aus
a) 3,5-Dimethyl-4-methylthio-phenyl-methylcarbamat der Formel 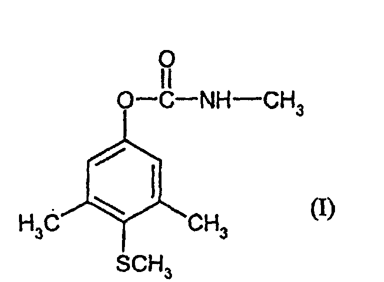 gegebenenfalls im Gemisch mit einem oder mehreren weiteren molluskiziden Wirkstoffen,
b) Hartweizenmehl oder Weichweizenmehl in Korngrößen unterhalb von 250 µ,
c) modifizierter Stärke und Harnstoff-Formaldehyd-Kondensationsprodukt,
d) Melasse und
e) gegebenenfalls Zusatzstoffen aus der Gruppe der Konservierungsmittel, Farbstoffe, Schneckenlockstoffe, Mahlhilfsmittel, Bitterstoffe, Warmblüter-Repellents und Anticaking-Mittel sowie auch Wasser,
bestehen.

2. Verfahren zur Herstellung von Schneckenködern gemäß Anspruch 1, **dadurch gekennzeichnet, dass** man
(1) 3,5-Dimethyl-4-methylthio-phenyl-methylcarbamat der Formel 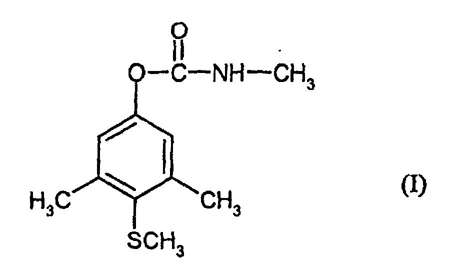 gegebenenfalls im Gemisch mit einem oder mehreren weiteren molluskiziden Wirkstoffen,
sowie gegebenenfalls im Gemisch mit Zusatzstoffen aus der Gruppe der Konservierungsmittel, Farbstoffe, Schneckenlockstoffe, Mahlhilfsmittel, Bitterstoffe, Warmblüter-Repellents und Anticaking-Mittel vermengt und fein vermahlt,
(2) die erhaltene Vormischung mit
- Hartweizenmehl oder Weichweizenmehl in Korngrößen unterhalb von 250 µ,
- modifizierter Stärke und Harnstoff-Formaldehydkondensationsprodukt
vermischt und dann mit Melasse besprüht,
(3) die resultierende homogene Mischung mit soviel Wasser versetzt, dass ein Teig entsteht,
(4) den Teig extrudiert und zerkleinert und
(5) das anfallende Produkt trocknet.

3. Verwendung von Schneckenködern gemäß Anspruch 1 zur Bekämpfung von terrestrischen Schnecken, **dadurch gekennzeichnet, dass** man das Ködermaterial auf den Lebensraum der Schnecken ausbringt.

## Claims

1. Slug and snail baits, comprising
a) 3,5-dimethyl-4-methylthio-phenyl methylcarbamate of the formula, 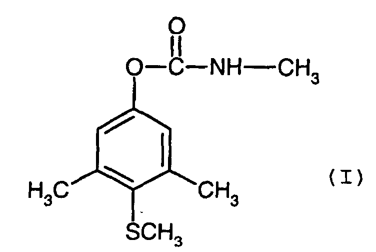 optionally in a mixture with one or more other molluscicidally active compounds,
b) durum wheat flour or wheat flour in particle sizes below 250 µ,
c) modified starch and a urea/formaldehyde condensate,
d) molasses and
e) optionally additives from the group consisting of preservatives, colorants, slug and snail attractants, grinding auxiliaries, bitter substances, homeotherm repellents and anticaking agents, and also water.

2. Process for preparing slug and snail baits according to Claim 1, **characterized in that**
(1) 3,5-dimethyl-4-methylthio-phenyl methylcarbamate of the formula, 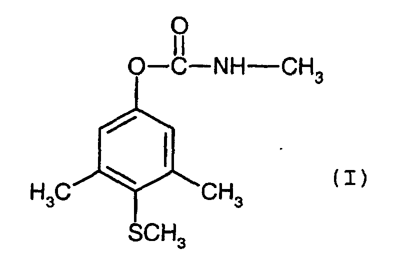 optionally in a mixture with one or more other molluscicidally active compounds,
and optionally in a mixture with additives from the group consisting of preservatives, colorants, slug and snail attractants, grinding auxiliaries, bitter substances, homeotherm repellents and anticaking agents, is mixed and finely ground,
(2) the resulting premix is mixed with
- durum wheat flour or wheat flour in particle sizes below 250 µ,
- modified starch and a urea/formaldehyde condensate
and then sprayed with molasses,
(3) the resulting homogeneous mixture is admixed with sufficient water to form a dough,
(4) the dough is extruded and comminuted and
(5) the resulting product is dried.

3. Use of slug and snail baits according to Claim 1 for controlling terrestrial slugs and snails, **characterized in that** the bait material is applied to the habitat of the slugs and snails.

## Revendications

1. Appâts pour mollusques gastéropodes, constitués
a) de méthylcarbamate de 3,5-diméthyl-4-méthylthiophényle de formule 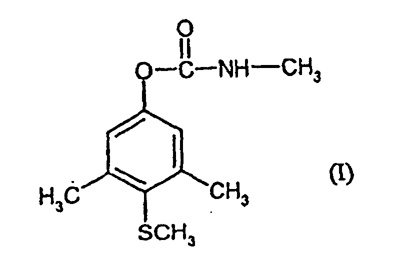 le cas échéant en mélange avec une ou plusieurs autres substances molluscicides actives,
b) de farine de blé dur ou de farine de blé tendre en particules de diamètre inférieur à 250 µm,
c) d'amidon modifié et de produit de condensation urée-formaldéhyde,
d) de mélasse et
e) le cas échéant, d'additifs du groupe des conservateurs, des colorants, des attractifs pour mollusques gastéropodes, des auxiliaires de broyage, des substances amères, des répulsifs pour animaux à sang chaud et des agents anti-agglomérants, ainsi que de l'eau.

2. Procédé de production d'appâts pour mollusques gastéropodes suivant la revendication 1, **caractérisé en ce que** :
(1) on mélange du méthylcarbamate de 3,5-diméthyl-4-méthylthiophényle de formule 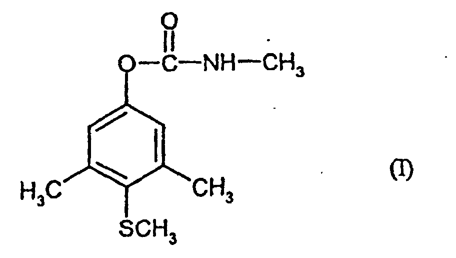 le cas échéant en mélange avec une ou plusieurs autres substances molluscicides actives,
ainsi que, le échéant en mélange avec des additifs du groupe des conservateurs, des colorants, des attractifs pour mollusques gastéropodes, des auxiliaires de broyage, des substances amères, des répulsifs pour animaux à sang chaud et des agents anti-agglomérants et on effectue un broyage fin,
(2) on ajoute au prémélange obtenu
- de la farine de blé dur ou de la farine de blé tendre en particules de diamètre inférieur à 250 µm,
- de l'amidon modifié et un produit de condensation urée-formaldéhyde,
puis on pulvérise de la mélasse sur le mélange,
(3) on additionne le mélange homogène obtenu d'une quantité suffisante d'eau pour former une pâte,
(4) on extrude la pâte et on la broie, et
(5) on sèche le produit obtenu.

3. Utilisation d'appâts pour mollusques gastéropodes suivant la revendication 1, pour combattre des mollusques gastéropodes terrestres, **caractérisée en ce qu'**on épand l'appât sur le biotope des mollusques gastéropodes.
